# EUROPEAN PATENT APPLICATION

(11) **EP 4 700 878 A1**
(43) Date of publication of application: **25.02.2026**
(21) Application number: 25182667.3
(22) Date of filing: 13.06.2025
(51) Int. Cl.: H01M 10/04, H01M 10/0587, H01M 10/0525, H01M 50/105

(54) **ECTRODE ASSEMBLY AND SECONDARY BATTERY INCLUDING THE SAME**

(30) Priority: 20.08.2024 KR 20240111144
(71) Applicant: Samsung SDI Co., Ltd., Yongin-si, Gyeonggi-do 17084 (KR)
(72) Inventor: JEONG, Yeon Bok, Yongin-si, Gyeonggi-do 17084 (KR)
(74) Representative: Gulde & Partner

(57) **Abstract**

A wound electrode assembly (110) includes a plurality of bent regions (R1, R2), wherein a negative electrode active material layer (111h, 111i) and the positive electrode active material layer (112h, 112i) are aligned based on positions of trailing edges of leading edge bent regions of the plurality of bent regions (R1, R2).

## Description

### BACKGROUND

### 1. Field

Embodiments of the present disclosure relate to an electrode assembly and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In a cycling process in which charging and discharging are repeated, the thickness of electrodes of the electrode assembly may increase during charging, and the thickness of the electrodes of the electrode assembly may decrease during discharging. The cycling process may allow the long-term performance and stability of the secondary battery to be evaluated, which may provide valuable data for optimizing the design and materials of the secondary battery.

The above information disclosed in this Background section is for enhancement of understanding of the background of the present disclosure, and therefore, it may contain information that does not constitute related (or prior) art.

### SUMMARY

An aspect of the disclosure provide an electrode assembly that includes a negative electrode plate including a negative electrode current collector and a negative electrode active material layer provided on a part of each of opposite surfaces of the negative electrode current collector, a positive electrode plate including a positive electrode current collector and a positive electrode active material layer provided on a part of each of opposite surfaces of the positive electrode current collector, and a separator interposed between the negative electrode plate and the positive electrode plate. The negative electrode plate, the positive electrode plate, and the separator are wound and form or define a plurality of bent regions. The negative electrode active material layer and the positive electrode active material layer are aligned based on the positions of trailing edges of leading edge bent regions of the plurality of bent regions of the negative electrode plate and the positive electrode plate. Alternatively, the leading edge bent region may be designated as first bent region and the trailing edge bent region may be designated as second edge bent region. The first bent region may be arranged opposite of the second bent region. The first bent region may extend between its leading and trailing edges. The second bent region may extend between its leading and trailing edges. The leading and trailing edges may be designated as first and second ends of the respective bent region. After winding, the electrode assembly may be pressed such that a middle region may be arranged between the bent regions. Hence, due to the alignment of the active material layers, the electrode assembly may be formed more homogeneously, thereby improving long-term performance and reducing local wear and tear caused by charging and discharging. The following embodiments can be combined as desired.

In some embodiments, the negative electrode active material layer may be provided from or extend into a region between one of the trailing edges and a leading edge of one of the leading edge bent regions. The embodiment may have the advantage that
In some embodiments, the negative electrode active material layer may be provided from within 1 mm to 2 mm of the trailing edge of the leading edge bent region. For example, the negative electrode active material layer may be arranged or end or begin at a distance of at least 1 mm and/or up to 1,2 mm, up to 1,4 mm, up to 1,6 mm, up to 1,8 mm or up to 2 mm to the trailing edge of the leading edge bent region. The embodiment may have the advantage that variations possibly caused by winding and/or pressing the wound electrode assembly do not affect the negative electrode active material layer.

In some embodiments, the positive electrode active material layer may be provided from or aligned with one of the trailing edges of the leading edge bent region. The embodiment may have the advantage that loss of capacity due to an unnecessarily small positive electrode active material layer is avoided.

In some embodiments, the negative electrode plate may include a negative electrode current collector. The negative electrode current collector may have a first negative electrode surface and a second negative electrode surface. The second negative electrode surface may be arranged opposite the first negative electrode surface. The negative electrode current collector may have a first negative electrode active material layer. The first negative electrode active material layer may be provided on the first negative electrode surface by coating. The negative electrode current collector may have a second negative electrode active material layer. The second negative electrode active material layer may be provided on the second negative electrode surface by coating. The positive electrode plate may include a positive electrode current collector. The positive electrode current collector may have a first positive electrode surface and a second positive electrode surface. The second positive electrode surface may be arranged opposite the first positive electrode surface. The positive electrode current collector may have a first positive electrode active material layer provided on the first positive electrode surface by coating. The positive electrode current collector may have a second positive electrode active material layer provided on the second positive electrode surface by coating.

In some embodiments, a first negative electrode uncoated portion and a second negative electrode uncoated portion, each of which is free from or not coated with the first negative electrode active material layer, may be provided or arranged at a winding leading edge and a winding trailing edge of the first negative electrode surface, respectively. A third negative electrode uncoated portion and a fourth negative electrode uncoated portion, each of which is free from or not coated with the second negative electrode active material layer, may be provided or arranged at a winding leading edge and a winding trailing edge of the second negative electrode surface, respectively. The embodiment may have the advantage that the bent portions can be bent at smaller radii due to the lack of the active material layers.

In some embodiments, the negative electrode plate and the positive electrode plate may be disposed such that the first negative electrode surface and the second positive electrode surface face each other.

In some embodiments, a first negative electrode tab and a second negative electrode tab may be provided or arranged at the third negative electrode uncoated portion and the fourth negative electrode uncoated portion, respectively. The embodiment may have the advantage that the electrode assembly can be connected easily without requiring much space for the electrode tabs.

In some embodiments, the first negative electrode active material layer may start from between the trailing edge and the leading edge of the leading edge bent region. The embodiment may have the advantage that as much of the active material as possible is made available without affecting the homogeneity of the wound and optionally pressed electrode assembly.

In some embodiments, the first negative electrode active material layer may be provided from within 1 mm to 2 mm of the trailing edge of the leading edge bent region. For example, the first negative electrode active material layer may be arranged or end or begin at a distance of at least 1 mm and/or up to 1,2 mm, up to 1,4 mm, up to 1,6 mm, up to 1,8 mm or up to 2 mm to the trailing edge of the leading edge bent region. The embodiment may have the advantage that variations possibly caused by winding and/or pressing the wound electrode assembly do not affect the first negative electrode active material layer.

In some embodiments, the area or total surface area of the first negative electrode active material layer may be greater than the area or total surface area of the second negative electrode active material layer. The embodiment may have the advantage that more surface area is available further away from a center of the wound and optionally pressed electrode assembly, which is utilized as good as possible, thereby increasing capacity of the electrode assembly.

In some embodiments, a first positive electrode uncoated portion and a second positive electrode uncoated portion, each of which may be free from or not coated with the first positive electrode active material layer, may be provided or arranged at a winding leading edge and a winding trailing edge of the first positive electrode surface, respectively. A third positive electrode uncoated portion and a fourth positive electrode uncoated portion, each of which may be free from or not coated with the second positive electrode active material layer, may be provided or arranged at a winding leading edge and a winding trailing edge of the second positive electrode surface, respectively. The embodiment may have the advantage that the bent portions can be bent at smaller radii due to the lack of the active material layers, even in case of variations caused while winding and optionally pressing.

In some embodiments, a first positive electrode tab and a second positive electrode tab may be provided or arranged at the first positive electrode uncoated portion and the second positive electrode uncoated portion, respectively. The embodiment may have the advantage that the electrode assembly can be easily electrically connected without requiring much space of the electrode tabs.

In some embodiments, the second positive electrode active material layer may start from the trailing edge of the leading edge bent region. The embodiment may have the advantage that as much active material as possible can be provided in the electrode assembly, allowing for a high capacity.

In some embodiments, the second positive electrode uncoated portion may be located or arranged on the outermost side of the electrode assembly and may be exposed to the outside while surrounding the outermost side of the electrode assembly. The embodiment may have the advantage that the electrode assembly can be easily inserted and used in a case or a pouch.

In some embodiments, the area or total surface area of the second positive electrode active material layer may be greater than the area or total surface area of the first positive electrode active material layer. The embodiment may have the advantage that more surface area is available further away from a center of the wound and optionally pressed electrode assembly, which is utilized as good as possible, thereby increasing capacity of the electrode assembly.

In some embodiments, the first negative electrode active material layer may be aligned so as to protrude farther than the second positive electrode active material layer in the direction toward the winding leading edge. The embodiment may have the advantage that more surface area is available further away from a center of the wound and optionally pressed electrode assembly, which is utilized as good as possible, thereby increasing capacity of the electrode assembly.

In some embodiments, the area or total surface area of the separator may be greater than the area or total surface area of each of the positive electrode plate and the negative electrode plate. The embodiment may have the advantage that the separator more reliably separates the electrode plates from each other, even in case of dimensional variations of the electrode plates of the separator.

In some embodiments, the area or total surface area of the positive electrode active material layer may be less than the area or total surface area of the negative electrode active material layer. The embodiment may have the advantage that the capacity of the electrode assembly can be improved

A secondary battery according to another aspect of the present disclosure to accomplish the above object includes the electrode assembly and a case having an interior space, the case being configured to receive the electrode assembly in the interior space. Hence, due to the alignment of the active material layers, the electrode assembly may be formed more homogeneously, thereby improving long-term performance and reducing local wear and tear caused by charging and discharging.

### BRIEF DESCRIPTION OF THE DRAWINGS

Features will become apparent to those of skill in the art by describing in detail exemplary embodiments with reference to the attached drawings, in which:
FIG. 1 is a perspective view of a secondary battery according to an embodiment;
FIG. 2 is a view showing the state of an electrode assembly of a secondary battery according to an embodiment of the present disclosure before winding;
FIG. 3 is a view showing the state of an electrode assembly of a secondary battery according to an embodiment of the present disclosure after winding;
FIG. 4 is a view showing the state of an electrode assembly of a secondary battery according to another embodiment of the present disclosure before winding;
FIG. 5 is a view showing a state of an electrode assembly of a secondary battery according to the other embodiment of the present disclosure after winding;
FIG. 6 is a view schematically showing a smartphone equipped with a secondary battery according to an embodiment of the present disclosure;
FIGS. 7A and 7B illustrate perspective views of an example of a battery pack including a secondary battery according to an embodiment of the present disclosure; and
FIGS. 8A and 8B illustrate perspective and side views of examples of a vehicle body and a vehicle components including a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the schematic drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges as described in this specification are intended to include any subranges, which may be expressly recited as amendments.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

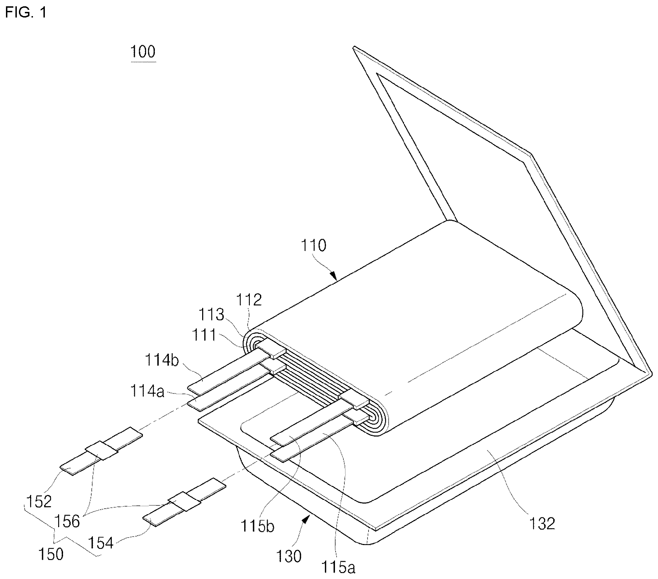

FIG. 1 is a perspective view showing the structure of a secondary battery according to an exemplary embodiment.

As shown in FIG. 1, a secondary battery 100 may include an electrode assembly 110 and a pouch 130 accommodating the electrode assembly 110.

The electrode assembly 110 may include a first electrode plate 111, a second electrode plate 112, and a separator 113 interposed therebetween. In some examples, the electrode assembly 110 may be formed by winding a stack of the first electrode plate 111, the separator 113, and the second electrode plate 112, which are formed as thin plates or films. In some examples, one or more electrode assemblies 110 may be stacked such that the electrode assemblies 110 are adjacent to each other and accommodated in the pouch 130, and the number of electrode assemblies 110 in the case is not limited in the present disclosure. The first electrode plate 111 of the electrode assembly 110 may act as a negative electrode, and the second electrode plate 112 may act as a positive electrode, e.g., the reverse may also be possible. Hereinafter, the first and second electrode plates 111 and 112 will be referred to as negative and positive electrode plates 111 and 112, respectively.

The negative electrode plate 111 may be formed by applying a first electrode active material, such as graphite or carbon, to a first electrode current collector formed of a metal foil, such as copper, a copper alloy, nickel, or a nickel alloy. The negative electrode plate 111 may include a first electrode active material layer that is a region to which the first electrode active material is applied. The negative electrode plate 111 may include a first uncoated portion that is a region to which the first electrode active material is not applied.

The negative electrode plate 111 may be a negative electrode plate, and may include a negative electrode tab 114a and 114b electrically connected to the first uncoated portion. In some examples, each of the negative electrode tabs 114a and 114b may be approximately flat, and may be fixed (e.g., welded) to the first uncoated portion. For example, each of the negative electrode tabs 114a and 114b may be fixed to the first uncoated portion by ultrasonic welding, laser welding, or resistance welding. That is, one end of the negative electrode tab 114a and 114b may be electrically connected to the first uncoated portion, and the other end of the negative electrode tab 114a and 114b may protrude and extend outward. In some embodiments, when the negative electrode plate 111 (e.g., a negative electrode plate) is manufactured, the negative electrode tab 114a and 114b may be formed by being cut in advance to protrude to one side of the electrode assembly 110, or the negative electrode tab 114a and 114b may protrude to one side of the electrode assembly 110 more than (e.g., farther than or beyond) the separator 113 without being separately cut.

The negative electrode active material, which is the first active material, may include a material capable of reversibly intercalating/deintercalating lithium ions, lithium metal, an alloy of lithium metal, a material capable of being doped and dedoped with lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and dedoped with lithium. The Si negative electrode active material may be silicon, a silicon-carbon composite, SiOₓ (0 < x < 2), a Si alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move. The non-aqueous organic solvent may be a carbonate, an ester, an ether, a ketone, an alcohol solvent, an aprotic solvent, and may be used alone or in combination of two or more. In addition, when a carbonate solvent is used, a mixture of cyclic carbonate and chain carbonate may be used.

The positive electrode plate 112 (e.g., a negative electrode plate) may be formed by applying a second electrode active material, such as a transition metal oxide, on a second electrode current collector formed of a metal foil, such as aluminum or an aluminum alloy. The positive electrode plate 112 may include a second electrode active material layer that is a region to which the second electrode active material is applied. The positive electrode plate 112 may include a second uncoated portion that is a region to which the second electrode active material is not applied.

The positive electrode plate 112 may include a positive electrode tab 115a and 115b electrically connected to the second uncoated portion. In some examples, each of the positive electrode tabs 115a and 115b may be approximately flat, and may be fixed (e.g., welded) to the second uncoated portion. For example, each of the positive electrode tabs 115a and 115b may be fixed to the second electrode uncoated portion by ultrasonic welding, laser welding, or resistance welding. That is, one end of the positive electrode tab 115a and 115b may be electrically connected to the second uncoated portion, and the other end of the positive electrode tab 115a and 115b may protrude and extend outward. In some embodiments, when the positive electrode plate 112 is manufactured, the positive electrode tab 115a and 115b may be formed by being cut in advance to protrude to one side of the electrode assembly 110, or the positive electrode tab 115a and 115b may protrude to one side of the electrode assembly 110 more than (e.g., farther than or beyond) the separator 113 without being separately cut.

As the positive electrode active material, which is the second active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material may be in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al).

In some examples, an electrode lead 150 may be included such that the negative electrode tabs 114a and 114b and the positive electrode tabs 115a and 115b may be electrically connected to the outside. The negative electrode tab 114a and 114b and the positive electrode tab 115a and 115b may be respectively welded to a negative electrode lead 152 and a positive electrode lead 154 of an external terminal to be electrically connected to the outside. A tab film 156 for insulation from the pouch 130 may be attached to the negative electrode lead 152 and the positive electrode lead 154. The pouch 130 may also be referred to as a case.

The separator 113 may be interposed between the negative electrode plate 111 and the positive electrode plate 112 to prevent electrical short circuit between the negative electrode plate 111 and the positive electrode plate 112. In practice, the separator 113 may be provided in a pair, and the negative electrode plate 111 may be interposed between the pair of separators 113.

Depending on the type of lithium secondary battery, the separator 113 may be present between the negative electrode plate 111 (e.g., the negative electrode) and the positive electrode plate 112 (e.g., the positive electrode). As the separator 113, polyethylene, polypropylene, polyvinylidene fluoride, or a multilayer film of two or more layers thereof may be used.

The separator 113 may include a porous substrate and a coating layer including an organic material, an inorganic material, or a combination thereof on one or both surfaces of the porous substrate. The organic material may include a polyvinylidene fluoride polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. The organic material and the inorganic material may be mixed in one coating layer or may be in the form of a coating layer containing an organic material and a coating layer containing an inorganic material that are laminated on each other.

In a state in which the electrode assembly 110 is accommodated in the pouch 130, sealing parts 132 of edges of the pouch 130 may come into contact with each other (e.g., the sealing parts 132 around the periphery of the bottom portion of the pouch 130 may come into contact with a corresponding peripheral area of the top potion (e.g., a cover) of the pouch 130) to be sealed. The sealing may be performed in a state in which the tab film 156 is disposed between the sealing parts 132. As shown in FIG. 1, the form in which the tab film 156 is attached to each of the negative electrode tab 114a and 114b and the positive electrode tab 115a and 115b is defined as a "separable tab film" (e.g., this sealing structure is referred to as a separable sealing structure).

The sealing parts 132 at the bottom portion of the pouch 130 as well as the top portion (e.g., the entire cover or at least the peripheral area of the cover) may be made of a heat-fusible material and may have a structure in which sealing is achieved by bonding heat-fusible layers to each other. Because the heat-fusible material generally has weak adhesion to metal, the tab film 156 in the form of a thin film may be attached to a tab to be fused to the pouch 130. However, in the separable sealing structure, the tab film 156 is attached to the negative electrode lead 152 and the positive electrode lead 154 and then welded thereto, followed by being heat-fused with the pouch 130, and thus, workability and productivity may be improved. The pouch 130 may have an interior space, and may receive the electrode assembly 110 in the interior space.

The thickness of the electrode plates may increase during charging of the secondary battery, and the thickness of the electrode plates may decrease during discharging of the secondary battery. Repeated contraction/expansion of the electrode plates in the cycling process may cause stress to be concentrated in a core part of the electrode assembly, which is structurally vulnerable, resulting in deformation. The core of the electrode assembly may mean the innermost part of the electrode assembly, which may be, for example, a part that is bent first from a winding leading edge, i.e., a leading edge bent region. For example, a wound type electrode assembly may have a void in a part that is structurally bent. If the negative electrode active material layer and the positive electrode active material layer are provided in a region deviating from the leading edge bent region (e.g., if no active material layer is disposed on the leading edge bent region that is structurally bent), deformation may occur in the void in the leading edge bent region in the cycling process. In contrast, according to the present disclosure, the negative and positive electrode plate active material layers may be provided to fill the void in the core part of the electrode assembly, thereby preventing deformation of the electrode assembly.

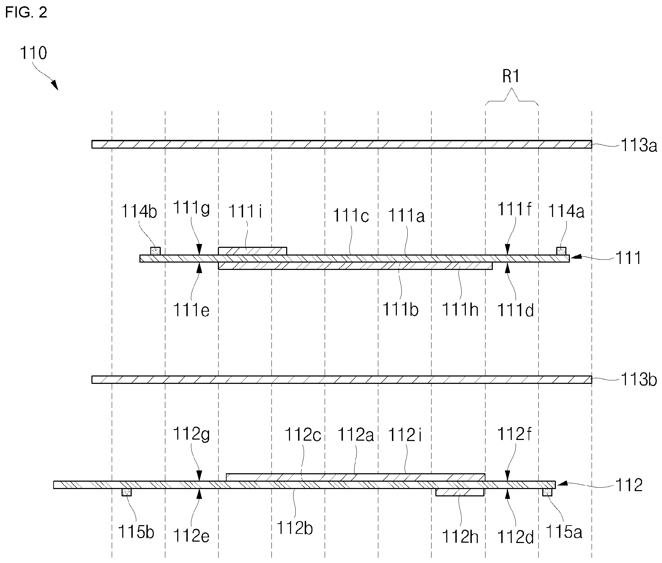

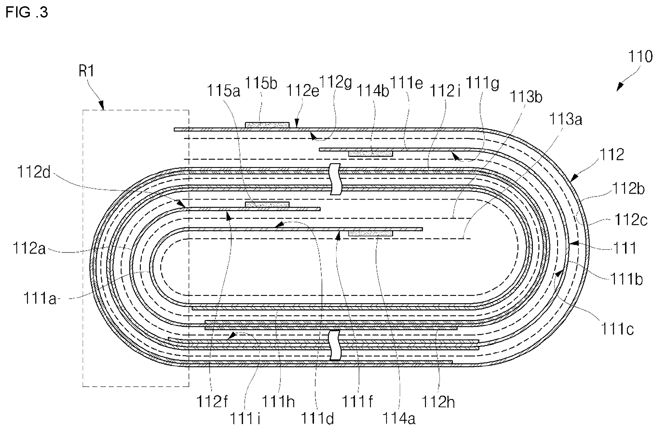

FIG. 2 is a view showing a state of the electrode assembly 110 of the secondary battery 100 before winding, and FIG. 3 is a view showing the state of the electrode assembly 110 of FIG. 2 after winding. Referring to FIG. 2, the plurality of dashed lines shown in a vertical direction indicate the area where the electrode assembly 110 is folded, the winding area, or the number of winding turns in a winding process of the electrode assembly 110.

As shown in FIG. 2, in some examples, a first negative electrode tab 114a may be provided at a winding leading edge of the electrode assembly 110 (right side in FIG. 2), and a second negative electrode tab 114b may be provided at a winding trailing edge of the electrode assembly 110 (left side in FIG. 2). In some examples, the electrode assembly 110 may include the negative electrode plate 111 including the first negative electrode tab 114a and the second negative electrode tab 114b, a pair of separators 113a and 113b configured to cover the negative electrode plate 111, and the positive electrode plate 112. In some examples, a first positive electrode tab 115a may be provided at a winding leading edge of the positive electrode plate 112, and a second positive electrode tab 115b may be provided at a winding trailing edge of the positive electrode plate 112. In some examples, the first and second negative electrode tabs 114a and 114b and the first and second positive electrode tabs 115a and 115b may be provided in a number greater than that shown in the figure.

In some examples, the winding leading edge refers to a region where winding starts in the winding process of the electrode assembly 110, and the winding trailing edge refers to a region where winding ends in the winding process of the electrode assembly 110. Accordingly, the first negative electrode tab 114a and the first positive electrode tab 115a provided at the winding leading edge may generally be located at the inner circumference (or the inner center) of the wound electrode assembly 110 (e.g., FIG. 3), and the second negative electrode tab 114b and the second positive electrode tab 115b provided at the winding trailing edge may generally be located at the outer circumference (or the outer surface) of the wound electrode assembly 110.

In some examples, each of the first and second negative electrode tabs 114a and 114b may be made of copper, a copper alloy, nickel, a nickel alloy, a clad metal of nickel/copper/nickel, copper plated with nickel, or the like. In some examples, each of the first and second positive electrode tabs 115a and 115b may be made of aluminum, an aluminum alloy, or the like.

Next, the negative electrode plate 111 and the positive electrode plate 112 of the electrode assembly 110 and the organic coupling relationship therebetween will be described in more detail.

In some examples, the negative electrode plate 111 may include a negative electrode current collector 111a, a first negative electrode active material layer 111h, a second negative electrode active material layer 111i, the first negative electrode tab 114a, and the second negative electrode tab 114b. The negative electrode current collector 111a may include a first negative electrode surface 111b and a second negative electrode surface 111c, which is opposite the first negative electrode surface 111b. In addition, the first negative electrode active material layer 111h may be provided on the first negative electrode surface 111b of the negative electrode current collector 111a by coating, and the second negative electrode active material layer 111i may be provided on the second negative electrode surface 111c of the negative electrode current collector 111a by coating.

In some examples, a first negative electrode uncoated portion 111d (corresponding to approximately 1.5 turns from one end), which is not coated with the first negative electrode active material layer 111h, may be provided at a winding leading edge of the first negative electrode surface 111b, and a second negative electrode uncoated portion 111e (corresponding to approximately 1.5 turns from the other end), which is not coated with the first negative electrode active material layer 111h, may be provided at a winding trailing edge of the first negative electrode surface 111b. In some examples, a third negative electrode uncoated portion 111f (corresponding to approximately 5 turns from one end), which is not coated with the second negative electrode active material layer 111i, may be provided at a winding leading edge of the second negative electrode surface 111c, and a fourth negative electrode uncoated portion 111g (corresponding to approximately 1.5 turns from the other end), which is not coated with the second negative electrode active material layer 111i, may be provided at a winding trailing edge of the second negative electrode surface 111c. In some examples, the first negative electrode tab 114a may be provided at the third negative electrode uncoated portion 111f of the winding leading edge of the second negative electrode surface 111c, and the second negative electrode tab 114b may be provided at the fourth negative electrode uncoated portion 111g of the winding trailing edge of the second negative electrode surface 111c.

In some examples, the pair of separators 113a and 113b may cover the first negative electrode uncoated portion 111d, the second negative electrode uncoated portion 111e, the third negative electrode uncoated portion 111f, the fourth negative electrode uncoated portion 111g, the first negative electrode active material layer 111h, and the second negative electrode active material layer 111i of the negative electrode plate 111. The length of each of the pair of separators 113a and 113b may be greater than the length of the negative electrode plate 111 (e.g., in a longitudinal direction of each of the pair of separators 113a and 113b and the negative electrode plate 111 in an unwound state).

In some examples, the positive electrode plate 112 may include a positive electrode current collector 112a, a first positive electrode active material layer 112h, a second positive electrode active material layer 112i, the first positive electrode tab 115a, and the second positive electrode tab 115b. The positive electrode current collector 112a may include a first positive electrode surface 112b and a second positive electrode surface 112c, which is opposite the first positive electrode surface 112b. In addition, the first positive electrode active material layer 112h may be provided on the first positive electrode surface 112b of the positive electrode current collector 112a by coating, and the second positive electrode active material layer 112i may be provided on the second positive electrode surface 112c of the positive electrode current collector 112a by coating.

In some examples, a first positive electrode uncoated portion 112d (corresponding to approximately 1.5 turns from one end), which is not coated with the first positive electrode active material layer 112h, may be provided at a winding leading edge of the first positive electrode surface 112b, and a second positive electrode uncoated portion 112e (corresponding to approximately 6.5 turns from the other end), which is not coated with the first positive electrode active material layer 112h, may be provided at a winding trailing edge of the first positive electrode surface 112b. In addition, a third positive electrode uncoated portion 112f (corresponding to approximately 1.5 turns from one end), which is not coated with the second positive electrode active material layer 112i, may be provided at a winding leading edge of the second positive electrode surface 112c, and a fourth positive electrode uncoated portion 112g (corresponding to approximately 3 turns from the other end), which is not coated with the second positive electrode active material layer 112i, may be provided at a winding trailing edge of the second positive electrode surface 112c. In some examples, the first positive electrode tab 115a may be provided at the first positive electrode uncoated portion 112d of the winding leading edge of the first positive electrode surface 112b, and the second positive electrode tab 115b may be provided at the second positive electrode uncoated portion 112e of the winding trailing edge of the first positive electrode surface 112b.

Referring to FIG. 3, the state of the electrode assembly 110 of the secondary battery 100 according to the embodiment of the present disclosure after winding is shown. In some examples, the electrode assembly 110 may have a plurality of bent regions and may be wound from the winding leading edge to the winding trailing edge. For example, a leading edge bent region R1 is a part that is bent first from the winding leading edge and may be referred to as a core of the electrode assembly 110. In some examples, the leading edge bent region R1 may correspond to approximately a second turn (column) from one end in FIG. 2 (e.g., second dashed column from right side of FIG. 2).

Referring to FIGS. 2 and 3, the negative electrode plate 111, the positive electrode plate 112, and the separator 113 may be wound while forming a plurality of bent regions. In some examples, the negative electrode active material layers (e.g., the first negative electrode active material layer 111h and the second negative electrode active material layer 111i) and the positive electrode active material layers (e.g., the first positive electrode active material layer 112h and the second positive electrode active material layer 112i) may be aligned based on the positions of trailing edges of the leading edge bent regions of the plurality of bent regions of the negative electrode plate 111 and the positive electrode plate 112. For example, the coating start positions of the negative electrode active material layers (e.g., the first negative electrode active material layer 111h and the second negative electrode active material layer 111i) and the positive electrode active material layers (e.g., the first positive electrode active material layer 112h and the second positive electrode active material layer 112i) may be disposed based on the trailing edge positions of the leading edge bent regions.

In some examples, the first negative electrode active material layer 111h of the negative electrode plate 111 may be provided from within the leading edge bent region R1 by coating. For example, referring to FIG. 2, an edge of the first negative electrode active material layer 111h of the negative electrode plate 111 may be within (e.g., extend into) the leading edge bent region R1. For example, the first negative electrode active material layer 111h may be provided from between the leading edge and the trailing edge of the leading edge bent region R1 by coating. In some examples, the first negative electrode active material layer 111h may be provided in the winding direction from approximately 1 mm to 2 mm before the trailing edge (e.g., ending) of the bent region R1 (in the leading edge direction) by coating. In some examples, the electrode assembly 110 may be aligned such that the start position of the first negative electrode active material layer 111h is approximately 1 mm to 2 mm before the trailing edge of the bent region R1 (in the leading edge direction), e.g., so the first negative electrode active material layer 111h may overlap approximately 1 mm to 2 mm of the trailing edge of the bent region R1.

In some examples, the first positive electrode active material layer 112h of the positive electrode plate 112 may be provided from approximately the same position as the trailing edge of the leading edge bent region R1 by coating. For example, referring to FIG. 2, an edge of the first positive electrode active material layer 112h of the positive electrode plate 112 may be aligned with the trailing edge (e.g., an ending) of the leading edge bent region R1 (e.g., an edge of the first positive electrode active material layer 112h may be aligned with the third dashed vertical line from the right in FIG. 2) . In some examples, the second positive electrode active material layer 112i of the positive electrode plate 112 may be provided from approximately the same position as the trailing edge of the leading edge bent region R1 by coating (e.g., edges of the first and second positive electrode active material layers 112h and 112i may be aligned). For example, the electrode assembly 110 may be aligned such that the start positions of the first positive electrode active material layer 112h and the second positive electrode active material layer 112i are approximately equal to the trailing edge of leading edge bent region R1. In some examples, the electrode assembly 110 may be aligned such that the first negative electrode active material layer 111h protrudes farther than the second positive electrode active material layer 112i in the direction toward the winding leading edge, e.g., may protrude into the leading edge bent region R1. Accordingly, the present disclosure may limit (e.g., adjust) the alignment position of the negative electrode active material layer to fill a void in the core part (e.g., in the leading edge bent region R1) that occurs structurally during winding, such that deformation of the core part, e.g., dents, is prevented or substantially minimized.

In some examples, the electrode assembly 110 may be disposed such that the first negative electrode surface 111b and the second positive electrode surface 112c face each other. For example, the pair of separators 113a and 113b may wrap around the negative electrode plate 111 and the first negative electrode surface 111b and the second positive electrode surface 112c may be disposed so as to face each other such that the first positive electrode surface 112b is located on the outermost side of the electrode assembly 110. In some examples, the second positive electrode uncoated portion 112e may be located on the outermost side of the electrode assembly 110 and may be exposed to the outside while surrounding the outermost side of the electrode assembly 110.

In some examples, the area of the first negative electrode active material layer 111h may be greater than the area of the second negative electrode active material layer 111i. In some examples, the area of the second positive electrode active material layer 112i may be greater than the area of the first positive electrode active material layer 112h. In some examples, the area of each of the separators 113a and 113b may be greater than the area of each of the negative electrode plate 111 and the positive electrode plate 112. In some examples, the area the positive electrode active material layer may be less than the area of the negative electrode active material layer. For example, a sum of areas of the first positive electrode active material layer 112h and the second positive electrode active material layer 112i may be less than a sum of areas of the first negative electrode active material layer 111h and the second negative electrode active material layer 111i.

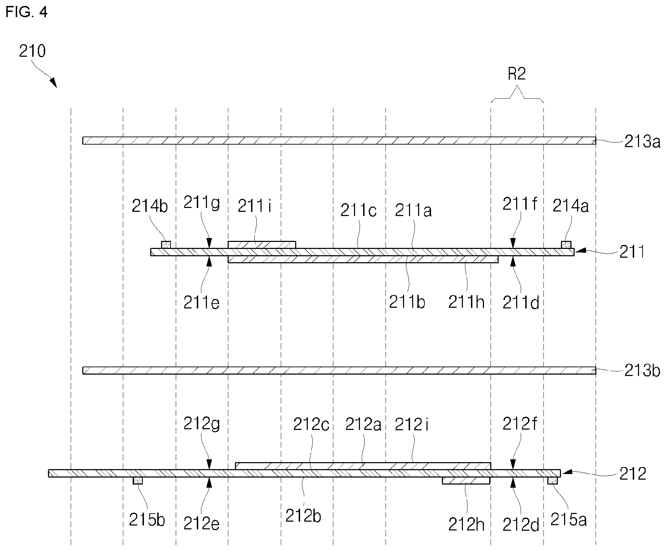

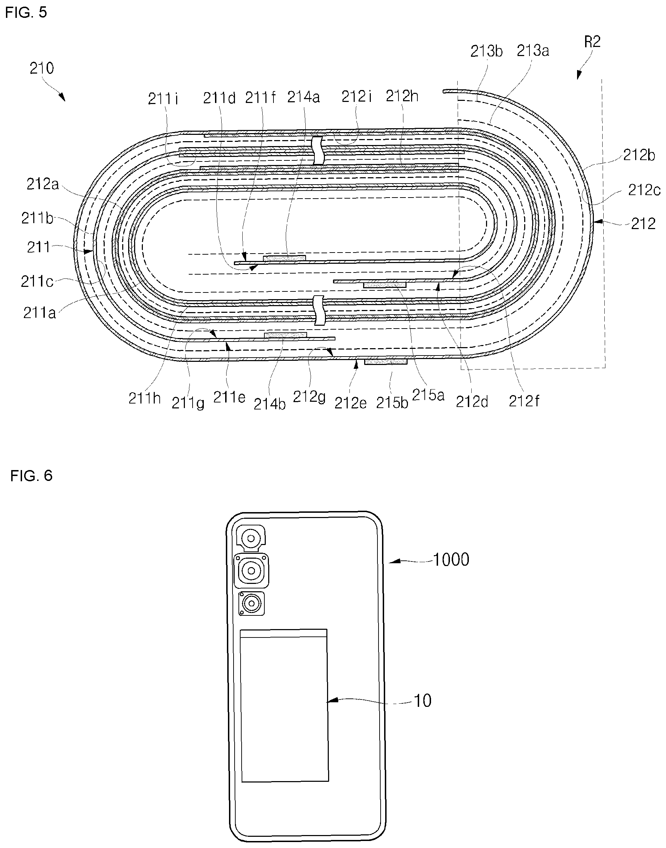

FIG. 4 is a view showing the state of an electrode assembly of a secondary battery according to another embodiment of the present disclosure before winding. FIG. 5 is a view showing the state of the electrode assembly of the secondary battery according to the other embodiment of the present disclosure after winding.

FIGS. 4 and 5 show an electrode assembly 210 wound with a different number of turns than the electrode assembly 110 of FIGS. 2 and 3. In some examples, a secondary battery 200 may be similar in configuration to the secondary battery 100 except for the number of turns of the electrode assembly 210 (e.g., so the winding and trailing leading edges of each of the electrode plats are arranged differently relative to a center of the wound structure), and a description of the same configuration will be omitted.

As shown in FIG. 4, in some examples, a first negative electrode tab 214a may be provided at a winding leading edge of the electrode assembly 210 (right side in FIG. 4), and a second negative electrode tab 214b may be provided at a winding trailing edge of the electrode assembly 210 (left side in FIG. 4). In some examples, the electrode assembly 210 may include a negative electrode plate 211 including a first negative electrode tab 214a and a second negative electrode tab 214b, a pair of separators 213a and 213b configured to cover the negative electrode plate 211, and a positive electrode plate 212. In some examples, a first positive electrode tab 215a may be provided at a winding leading edge of the positive electrode plate 212, and a second positive electrode tab 215b may be provided at a winding trailing edge of the positive electrode plate 212. In some examples, the first and second negative electrode tabs 214a and 214b and the first and second positive electrode tabs 215a and 215b may be provided in a number greater than that shown in the figure.

In some examples, the first negative electrode tab 214a and the first positive electrode tab 215a provided at the winding leading edge may generally be located at the inner circumference (or the inner center) of the wound electrode assembly 210, and the second negative electrode tab 214b and the second positive electrode tab 215b provided at the winding trailing edge may generally be located at the outer circumference (or the outer surface) of the wound electrode assembly 210.

In some examples, the negative electrode plate 211 may include a negative electrode current collector 211a, a first negative electrode active material layer 211h, a second negative electrode active material layer 211i, the first negative electrode tab 214a, and the second negative electrode tab 214b. The negative electrode current collector 211a may include a first negative electrode surface 211b and a second negative electrode surface 211c, which is opposite the first negative electrode surface 211b. In addition, the first negative electrode active material layer 211h may be proved on the first negative electrode surface 211b of the negative electrode current collector 211a by coating, and the second negative electrode active material layer 211i may be proved on the second negative electrode surface 211c of the negative electrode current collector 211a by coating.

In some examples, a first negative electrode uncoated portion 211d (corresponding to approximately 1.5 turns from one end), which is not coated with the first negative electrode active material layer 211h, may be provided at a winding leading edge of the first negative electrode surface 211b, and a second negative electrode uncoated portion 211e (corresponding to approximately 1.5 turns from the other end), which is not coated with the first negative electrode active material layer 211h, may be provided at a winding trailing edge of the first negative electrode surface 211b. In some examples, a third negative electrode uncoated portion 211f (corresponding to approximately 5 turns from one end), which is not coated with the second negative electrode active material layer 211i, may be provided at a winding leading edge of the second negative electrode surface 211c, and a fourth negative electrode uncoated portion 211g (corresponding to approximately 1.5 turns from the other end), which is not coated with the second negative electrode active material layer 211i, may be provided at a winding trailing edge of the second negative electrode surface 211c. In some examples, the first negative electrode tab 214a may be provided at the third negative electrode uncoated portion 211f of the winding leading edge of the second negative electrode surface 211c, and the second negative electrode tab 214b may be provided at the fourth negative electrode uncoated portion 211g of the winding trailing edge of the second negative electrode surface 211c.

In some examples, the pair of separators 213a and 213b may cover the first negative electrode uncoated portion 211d, the second negative electrode uncoated portion 211e, the third negative electrode uncoated portion 211f, the fourth negative electrode uncoated portion 211g, the first negative electrode active material layer 211h, and the second negative electrode active material layer 211i of the negative electrode plate 211. The length of each of the pair of separators 213a and 213b may be greater than the length of the negative electrode plate 211.

In some examples, the positive electrode plate 212 may include a positive electrode current collector 212a, a first positive electrode active material layer 212h, a second positive electrode active material layer 212i, the first positive electrode tab 215a, and the second positive electrode tab 215b. The positive electrode current collector 212a may include a first positive electrode surface 112b, which is approximately flat, and a second positive electrode surface 212c, which is approximately flat and is opposite the first positive electrode surface 212b. In addition, the first positive electrode active material layer 212h may be provided on the first positive electrode surface 212b of the positive electrode current collector 212a by coating, and the second positive electrode active material layer 212i may be provided on the second positive electrode surface 212c of the positive electrode current collector 212a by coating.

In some examples, a first positive electrode uncoated portion 212d (corresponding to approximately 1.5 turns from one end), which is not coated with the first positive electrode active material layer 212h, may be provided at a winding leading edge of the first positive electrode surface 212b, and a second positive electrode uncoated portion 212e (corresponding to approximately 7.5 turns from the other end), which is not coated with the first positive electrode active material layer 212h, may be provided at a winding trailing edge of the first positive electrode surface 212b. In addition, a third positive electrode uncoated portion 212f (corresponding to approximately 1.5 turns from one end), which is not coated with the second positive electrode active material layer 212i, may be provided at a winding leading edge of the second positive electrode surface 212c, and a fourth positive electrode uncoated portion 212g (corresponding to approximately 3.5 turns from the other end), which is not coated with the second positive electrode active material layer 212i, may be provided at a winding trailing edge of the second positive electrode surface 212c. In some examples, the first positive electrode tab 215a may be provided at the first positive electrode uncoated portion 212d of the winding leading edge of the first positive electrode surface 212b, and the second positive electrode tab 215b may be provided at the second positive electrode uncoated portion 212e of the winding trailing edge of the first positive electrode surface 212b.

Referring to FIG. 5, the state of the electrode assembly 210 of the secondary battery 200 according to the embodiment of the present disclosure after winding is shown. In some examples, the electrode assembly 210 may have a plurality of bent regions and may be wound from the winding leading edge to the winding trailing edge. For example, a leading edge bent region R2 is a part that is bent first from the winding leading edge and may be referred to as a core of the electrode assembly 210. In some examples, the leading edge bent region R2 may correspond to approximately a second turn (column) from one end in FIG. 4.

Referring to FIGS. 4 and 5, the first negative electrode active material layer 211h of the negative electrode plate 211 may be provided from within the leading edge bent region R2 by coating. For example, the first negative electrode active material layer 211h may be provided from between the leading edge and the trailing edge of the leading edge bent region R2 by coating. In some examples, the first negative electrode active material layer 211h may be provided from approximately 1 mm to 2 mm before the trailing edge of the bent region R2 by coating, e.g., extend to a distance of 1 mm to 2 mm into the bent region R2. In some examples, the first positive electrode active material layer 212h of the positive electrode plate 212 may be provided from approximately the same position as the trailing edge of the leading edge bent region R2 by coating. Accordingly, the present disclosure may limit the alignment position of the negative electrode active material layer regardless of the number of turns of the electrode assembly to fill a void in the core part that occurs structurally during winding such that deformation of the core part, such as dents, is minimized.

FIG. 6 is a view schematically showing a smartphone equipped with a secondary battery according to an embodiment of the present disclosure. As shown in FIG. 6, a secondary battery 10 according to the above-described embodiment of the present disclosure may be a small battery mounted in a small portable device such as a smartphone 1000. In this case, because the exemplary secondary battery 10 is configured to be able to increase the capacity thereof while having a slim internal structure, the above-described secondary battery 10 may be a battery suitable for application to small portable devices. As used herein, the terms "secondary battery" and "battery" have the same meaning and are different only in expression for convenience of description. The secondary battery 10 in FIG. 6 may have the structure of either of the secondary battery 100 or the secondary battery 200 described previously.

The secondary battery according to the above-described embodiment may be increased in size to be used to manufacture a battery pack.

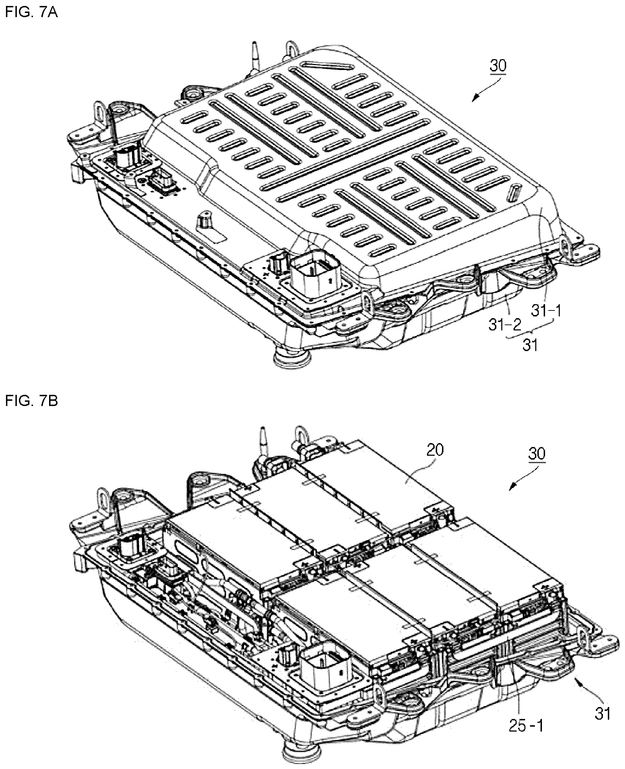

FIGS. 7A and 7B illustrate perspective views of an example of a battery pack 30 with and without a second housing, respectively. Referring to FIGS. 7A and 7B, the battery pack 30 may include a plurality of battery modules 20 and a housing 31 for accommodating the plurality of battery modules 20. For example, the housing 31 may include first and second housings 31-1 and 31-2 coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output.

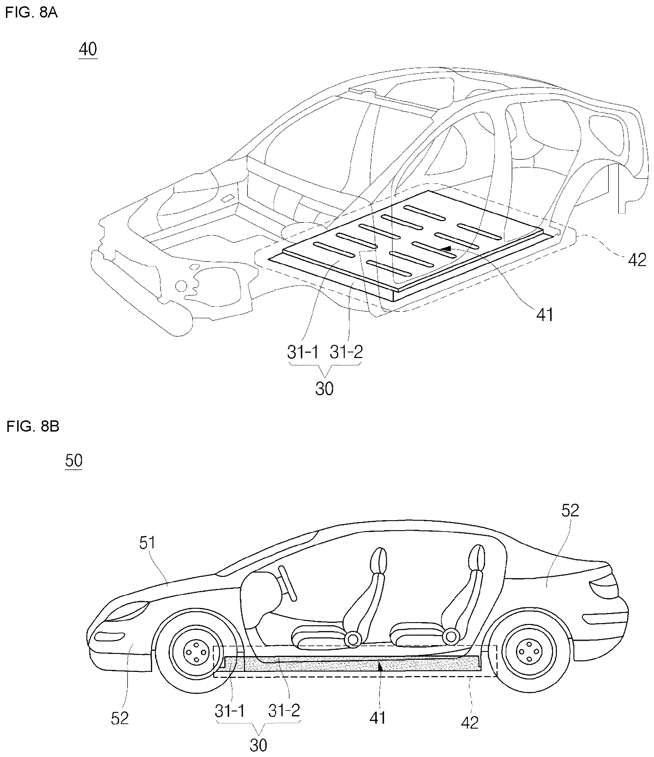

FIGS. 8A and 8B illustrate perspective and side views of examples of a vehicle body 40 and a vehicle components.

In FIG. 8A, the battery pack 30 may include the first housing 30-1 (e.g., a battery pack cover), which is a part of a vehicle underbody 41, and a second housing 30-2 (e.g., a pack frame) located under the vehicle underbody 41. The second housing 30-2 and the first housing 30-1 may be integrally formed with a vehicle floor 42. The vehicle underbody 41 separates the inside and outside of a vehicle, and the second housing 30-2 may be located outside the vehicle.

Referring to FIG. 8B, a vehicle 50 may be formed by combining additional parts, such as a hood 51 in front of the vehicle and fenders 52 respectively located in the front and rear of the vehicle to the vehicle body 40. The vehicle 50 may include the battery pack 30 that includes the first housing 30-1 and the second housing 30-2, and the battery pack 30 may be coupled to the vehicle body 40.

According to the present disclosure, it is possible to set the alignment position of an electrode plate active material layer based on a leading edge bent region of the electrode assembly and to fill a void in a core part of the electrode assembly where stress is concentrated in a cycling process, thereby preventing deformation of the electrode assembly.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode assembly (110), comprising:
a negative electrode plate (111) including a negative electrode current collector (111a) and a negative electrode active material layer (111h, 111i) on a part of each of opposite surfaces (111b, 111c) of the negative electrode current collector (111a);
a positive electrode plate (112) including a positive electrode current collector (112a) and a positive electrode active material layer (112h, 112i) on a part of each of opposite surfaces (112b, 112c) of the positive electrode current collector (112a); and
a separator (113) between the negative electrode plate (111) and the positive electrode plate (112),
wherein:
the negative electrode plate (111), the positive electrode plate (112), and the separator (113) are wound and define a plurality of bent regions (R1, R2), and
the negative electrode active material layer (111h) and the positive electrode active material layer (112h) are aligned based on positions of trailing edges of leading edge bent regions (R1) of the plurality of bent regions (R1, R2) of the negative electrode plate (111) and the positive electrode plate (112).

2. The electrode assembly (110) as claimed in claim 1, wherein the negative electrode active material layer (111h, 111i) extends into a region between one of the trailing edges and a leading edge of one of the leading edge bent regions (R1).

3. The electrode assembly (110) as claimed in claim 2, wherein the negative electrode active material layer (111h, 111i) extends into a distance of 1 mm to 2 mm from the one of the trailing edges.

4. The electrode assembly (110) as claimed in any of claims 1 to 3, wherein the positive electrode active material layer (112h, 112i) is aligned with one of the trailing edges of one of the leading edge bent regions (R1).

5. The electrode assembly (110) as claimed in any of claims 1 to 4, wherein:
the negative electrode plate (111) includes a negative electrode current collector (111a) having a first negative electrode surface (111b) and a second negative electrode surface (111c) opposite the first negative electrode surface (111b), a first negative electrode active material layer (111h) on the first negative electrode surface (111b), and a second negative electrode active material layer (111i) on the second negative electrode surface (111c), and
the positive electrode plate (112) includes a positive electrode current collector (112a) having a first positive electrode surface (112b) and a second positive electrode surface (112c) opposite the first positive electrode surface (112b), a first positive electrode active material layer (112h) on the first positive electrode surface (112b), and a second positive electrode active material layer ( 112i) on the second positive electrode surface (112c).

6. The electrode assembly (110) as claimed in claim 5, wherein the negative electrode plate (111) and the positive electrode plate (112) are arranged to have the first negative electrode surface (111b) and the second positive electrode surface (112c) face each other.

7. The electrode assembly (110) as claimed in claim 5 or 6, wherein:
a first negative electrode uncoated portion (111d) and a second negative electrode uncoated portion (111e), each of which is free from the first negative electrode active material layer (111h), are arranged at a winding leading edge and a winding trailing edge of the first negative electrode surface (111b), respectively, and
a third negative electrode uncoated portion (111f) and a fourth negative electrode uncoated portion (111g), each of which is free from the second negative electrode active material layer (111i), are arranged at a winding leading edge and a winding trailing edge of the second negative electrode surface (111c), respectively.

8. The electrode assembly (110) as claimed in claim 7, wherein a first negative electrode tab (114a) and a second negative electrode tab (114b) are arranged at the third negative electrode uncoated portion (111f) and the fourth negative electrode uncoated portion (111g), respectively,
and/or wherein the first negative electrode active material layer (111h) starts from between the winding trailing edge and the winding leading edge of one of the leading edge bent regions (R1),
and/or wherein the first negative electrode active material layer (111h) is within 1 mm to 2 mm of the winding trailing edge of one of the leading edge bent regions (R1),
and/or wherein an area of the first negative electrode active material layer (111h) is greater than an area of the second negative electrode active material layer (111i).

9. The electrode assembly (110) as claimed in any of claims 5 to 8, wherein:
a first positive electrode uncoated portion (112d) and a second positive electrode uncoated portion (112e), each of which is free from the first positive electrode active material layer (112h), are arranged at a winding leading edge and a winding trailing edge of the first positive electrode surface (112b), respectively, and
a third positive electrode uncoated portion (112f) and a fourth positive electrode uncoated portion (112g), each of which is free from the second positive electrode active material layer (112i), are arranged at a winding leading edge and a winding trailing edge of the second positive electrode surface (112c), respectively.

10. The electrode assembly (110) as claimed in claim 9, wherein a first positive electrode tab (115a) and a second positive electrode tab (115b) are arranged at the first positive electrode uncoated portion (112d) and the second positive electrode uncoated portion (112e), respectively,
and/or wherein the second positive electrode active material layer (112i) starts from the winding trailing edge of one of the leading edge bent regions (R1),
and/or wherein the second positive electrode uncoated portion (112e) is arranged on an outermost side of the electrode assembly (110) and is exposed to an outside while surrounding the outermost side of the electrode assembly (110),
and/or wherein an area of the second positive electrode active material layer (112i) is greater than an area of the first positive electrode active material layer (112h).

11. The electrode assembly (110) as claimed in any of claims 5 to 10, wherein the first negative electrode active material layer (111h) is aligned so as to protrude farther than the second positive electrode active material layer (112i) in a direction toward a winding leading edge.

12. The electrode assembly (110) as claimed in any of claims 1 to 11, wherein an area of the separator (113) is greater than an area of each of the positive electrode plate (112) and the negative electrode plate (111).

13. The electrode assembly (110) as claimed in any of claims 1 to 12, wherein an area of the positive electrode active material layer (112h, 112i) is less than an area of the negative electrode active material layer (111h, 111i).

14. A secondary battery (100), comprising:
the electrode assembly (110) as claimed in any of the previous claims; and
a case having an interior space, the case accommodating the electrode assembly (110) in the interior space.
